# EUROPÄISCHE PATENTSCHRIFT

(11) **EP 1 236 638 B1**
(45) Veröffentlichungstag und Bekanntmachung des Hinweises auf die Patenterteilung: **08.02.2006**
(21) Anmeldenummer: 02000495.8
(22) Anmeldetag: 09.01.2002
(51) Int. Cl.: B62D 6/00

(54) **Verfahren und Computerprogramm zum Betrieb einer Fahrzeuglenkung, Steuer- und/oder Regelgerät für eine Fahrzeuglenkung sowie Fahrzeuglenkung**
Method and computer program for operating a vehicle steering system, control and/or regulation device for a vehicle steering system and vehicle steering system
Procédé et programme d'ordinateur pour commander une direction de véhicule, dispositif de commande et/ou régulation pour direction et direction de véhicule

(30) Priorität: 28.02.2001 DE 10109491
(43) Veröffentlichungstag der Anmeldung: 04.09.2002
(73) Patentinhaber: ROBERT BOSCH GMBH, 70442 Stuttgart (DE)
(72) Erfinder: Knoop, Michael, 71638 Ludwigsburg (DE)

(56) Entgegenhaltungen:
- DE-A- 3 624 530
- DE-A- 19 841 710
- DE-A- 19 920 718
- US-A- 4 932 492

## Beschreibung

### Stand der Technik

Die Erfindung betrifft zunächst ein Verfahren zum Betrieb einer Fahrzeuglenkung, bei dem die Lenkübersetzung abhängig von mindestens einem vom Fahrzustand des Fahrzeugs abhängigen veränderlichen Parameter verändert wird, wobei die Geschwindigkeit, mit der sich die Lenkübersetzung ändern kann, begrenzt wird.

Ein Verfahren dieser Art ist aus der DE 36 24 530 A1 bekannt. Dort ist ein mechanisches Lenksystem offenbart, bei dem die Stellgeschwindigkeit einer Lenkverhältnis-Verstelleinrichtung bei zunehmender Fahrgeschwindigkeit mittels einer Kennlinie verringert wird. Auch die Lenkübersetzung wird abhängig von der Fahrgeschwindigkeit eingestellt. Aus der besagten Kennlinie resultiert eine Begrenzung der Geschwindigkeit, mit der sich die Lenkübersetzung ändern kann, nach oben und nach unten.

Ein ähnliches Verfahren ist auch aus der DE 195 40 956 C1 bekannt. In dieser ist ein Steer-by-Wire-Lenksystem beschrieben, bei dem ein Lenkrad lediglich mittelbar mit einer Lenkgetriebeanordnung gekoppelt ist. Abhängig von der Lenkradstellung wird eine elektronische Stellgröße gebildet, welche zur Regelung des Radwinkels verwendet wird. Zusätzlich zum Lenkradwinkel werden bei dem bekannten Verfahren noch weitere Parameter verwendet, um die Stellgröße für den Radwinkel zu bestimmen. Zu diesen Parametern gehört z.B. die Fahrzeuggeschwindigkeit, der Gierwinkel des Fahrzeugs sowie Signale von den Sensoren des ABS und des ESP-Systems.

Auch bei konventionellen Fahrzeuglenkungen, bei denen eine ständige mechanische Verbindung zwischen Lenkrad und gelenkten Rädern vorliegt, ist eine variable Lenkübersetzung bekannt. Die DE 197 23 358 A1 beschreibt beispielsweise ein zwischen Lenkrad und Zahnstange angeordnetes Zwischenlenkgetriebe, welches zwei mechanische Eingänge und einen mechanischen Ausgang aufweist. Der eine mechanische Eingang ist für eine mit dem Lenkrad drehfest verbundene Lenkwelle vorgesehen, wohingegen der andere Eingang mit der Abtriebswelle eines Servomotors verbunden ist, welcher wiederum abhängig vom Lenkradwinkel und von fahrzustandsabhängigen Größen angesteuert wird. Ausgangsseitig ist das Zwischenlenkgetriebe mit einem Ritzel gekoppelt, welches mit einer Zahnstange einer Zahnstangenlenkung kämmt. Durch diese wird wiederum der Radwinkel der gelenkten Räder eingestellt. Das Zwischenlenkgetriebe wird beispielsweise als Getriebe zur additiven Winkelüberlagerung ausgeführt. Dann kann die Lenkübersetzung, also das Verhältnis zwischen Lenkradwinkel und Radwinkel, durch die vom Lenkradwinkel und von Fahrzustandsgrößen abhängige Stellung der Abtriebswelle des Servomotors verändert werden.

Unter dem Radwinkel wird hier ein Lenkausschlag mindestens eines Rads verstanden, welcher erforderlich ist, um das Fahrzeug in eine gewünschte Richtung zu lenken. Der Radwinkel ist bei einer variablen Lenkübersetzung also nicht starr mit dem Lenkradwinkel gekoppelt. Je nach Fahrsituation und Fahrbahnzustand können unterschiedliche Lenkübersetzungen verwendet werden. So wird z.B. bei einer sehr geringen Fahrzeuggeschwindigkeit, z.B. beim Einparken, eine niedrige Lenkübersetzung zum Einsatz kommen, so dass der Fahrer mit einer vergleichsweise geringen Lenkradbewegung bereits eine große Verstellung des Radwinkels erreichen kann. Umgekehrt wird bei einer hohen Geschwindigkeit des Fahrzeugs eine hohe Lenkübersetzung gewählt werden, so dass das Fahrzeug mit hoher Präzision und feinfühlig gelenkt werden kann.

Es wurde nun jedoch festgestellt, dass die Veränderung der Lenkübersetzung in bestimmten Betriebszuständen des Kraftfahrzeugs zu Irritationen seitens des Fahrers führen kann. Dies kann im besten Fall die Akzeptanz einer solchen Fahrzeuglenkung mit variabler Lenkübersetzung beim Benutzer erschweren, kann aber auch in bestimmten Fahrzuständen des Fahrzeugs die Sicherheit bei der Führung des Fahrzeugs beeinträchtigen.

Die vorliegende Erfindung hat daher die Aufgabe, ein Verfahren der eingangs genannten Art so weiterzubilden, dass einerseits der Vorteil einer situationsangepassten variablen Lenkübersetzung erhalten bleibt, andererseits es aber nicht zu Irritationen beim Fahrer aufgrund der Variabilität der Lenkübersetzung kommt.

Diese Aufgabe wird bei einem Verfahren der eingangs genannten Art dadurch gelöst, dass die Geschwindigkeit, mit der die Veränderung der Lenkübersetzung erfolgt, von einem Lenkradwinkel und/oder einer Lenktätigkeit abhängt.

### Vorteile der Erfindung

Das erfindungsgemäße Verfahren beruht auf der Erkenntnis, dass Irritationen seitens des Fahrers, die durch eine Veränderung der Lenkübersetzung hervorgerufen werden, dann akzeptabel sind oder überhaupt nicht mehr auftreten, wenn die Änderungsgeschwindigkeit der Lenkübersetzung situationsabhängig begrenzt wird. Je nach dem Betrag, der gewählt wird für die besagte Geschwindigkeit, kann eine Veränderung der Lenkübersetzung vom Fahrer sehr gut beherrscht werden oder wird vom Fahrer überhaupt nicht mehr wahrgenommen.

Durch eine solche Begrenzung der Geschwindigkeit der Veränderung der Lenkübersetzung wird es dem Fahrer jedenfalls erleichtert, sich an das geänderte Lenkverhalten anzupassen. Hierdurch wird die Sicherheit bei der Führung eines Kraftfahrzeugs, welches mit einer Lenkung mit variabler Lenkübersetzung ausgestattet ist, erheblich erhöht.

Dadurch, dass die Geschwindigkeit, mit der die Veränderung der Lenkübersetzung erfolgt, vom Lenkwinkel und/oder der Lenktätigkeit abhängt, wird der Tatsache Rechnung getragen, dass es Fahrzustände gibt, in denen der Fahrer eine hohe Änderungsgeschwindigkeit der Lenkübersetzung beherrschen kann, wohingegen in anderen Fahrzuständen nur eine geringe Änderungsgeschwindigkeit akzeptierbar ist. Eine solche situationsabhängige Veränderung der Lenkübersetzung ist durch die erfindungsgemäßen Maßnahmen ohne zusätzliche Komponenten äußerst preiswert möglich.

Vorteilhafte Weiterbildungen der Erfindung sind in Unteransprüchen angegeben.

In einer ersten Weiterbildung ist angegeben, dass aus der Stellung eines Bedienelements und aus dem veränderlichen Parameter eine elektronische Stellgröße für die Steuerung und/oder Regelung des Radwinkels mindestens eines Rads des Fahrzeugs oder eines Zusatzlenkwinkels oder eines Zusatzhubs einer Zahnstange gebildet wird. Ein solches Verfahren wird also explizit bei einer Steer-by-wire-Fahrzeugsteuerung oder einer konventionellen mechanischen Fahrzeugsteuerung mit variabler Lenkübersetzung eingesetzt.

Bevorzugt wird auch, dass bei einem fehlerhaften Parameter die Lenkübersetzung auf einen konstanten Defaultwert eingestellt wird. Durch diese Weiterbildung des erfindungsgemäßen Verfahrens wird berücksichtigt, dass es in den Signalquellen, welche die veränderlichen Parameter bereitstellen, und auf den Signalverbindungen zu Störungen kommen kann, welche die Qualität und/oder die Zuverlässigkeit der für die Veränderung der Lenkübersetzung verwendeten Parameter beeinträchtigen können. Unter bestimmten Umständen ist es auch möglich, dass erforderliche Signale überhaupt nicht mehr vorliegen, so dass eine fahrsituationsabhängige Lenkübersetzung überhaupt nicht mehr bestimmt werden kann. Ein solcher Fehler wird beispielsweise durch eine Plausibilitätsprüfung identifiziert.

In diesem Fall wird die Lenkübersetzung auf einen konstanten Wert eingestellt. Bei diesem Wert handelt es sich um eine Lenkübersetzung, welche es dem Fahrer in allen üblichen Situationen ermöglicht, das Fahrzeug sicher zu beherrschen. Im Grunde wird durch einen solchen konstanten Defaultwert ein übliches Lenksystem ohne variable Lenkübersetzung nachgebildet. In einem solchen Fall macht sich die Begrenzung der Geschwindigkeit, mit der sich die Lenkübersetzung zum Defaultwert hin ändert, besonders günstig bemerkbar, da der Fehler plötzlich auftreten kann und es ohne Begrenzung der Änderungsgeschwindigkeit der Lenkübersetzung zu einer schlagartigen Änderung kommen könnte. So wird z.B. vermieden, dass der Fahrer durch eine selbsttätige Drehung des Bedienelements oder durch selbsttätiges Einschlagen der Räder so irritiert wird, dass er die Beherrschung über das Fahrzeug verliert.

Außerdem wird vorgeschlagen, dass dann, wenn sich das Bedienelement im Bereich seiner Mittelstellung befindet, die Veränderung der Lenkübersetzung mit mittlerer bis hoher Geschwindigkeit erfolgt. Im Bereich der Mittelstellung des Bedienelements befinden sich üblicherweise auch die entsprechenden lenkbaren Räder des Fahrzeugs in ihrer Mittelstellung. Eine Veränderung der Lenkübersetzung führt in einer solchen Situation somit zu keiner oder nur zu einer geringen Bewegung der gelenkten Räder. Die Veränderung der Lenkübersetzung kann daher sehr schnell erfolgen. Wenn sich Bedienelement und Räder exakt in der Mittelstellung befinden, kann die Lenkübersetzung sogar schlagartig geändert werden, ohne dass sich dies in irgendeiner Art und Weise sofort durch eine selbsttätige Steuerbewegung für den Fahrer bemerkbar macht.

Dann, wenn sich das Bedienelement außerhalb des Bereichs seiner Mittelstellung befindet und nicht oder nur langsam bewegt wird, kann die Veränderung der Lenkübersetzung nur mit kleiner bis geringer Geschwindigkeit erfolgen. Bei eingeschlagener Lenkung macht sich eine Veränderung der Lenkübersetzung besonders deutlich bemerkbar, da diese zu einer deutlichen Verringerung oder Erhöhung des Kurvenradius führt. Um hier den Fahrer nicht zu überfordern und die Sicherheit des Fahrzeugs nicht zu gefährden, wird daher nur eine geringe Änderungsgeschwindigkeit zugelassen oder, je nach Fahrsituation, sogar überhaupt keine Veränderung der Lenkübersetzung ermöglicht. Vorteilhafterweise erfolgt die Veränderung der Lenkübersetzung mit höherer Geschwindigkeit erst wieder dann, wenn der Fahrer das Bedienelement wieder in den Bereich der Mittelstellung bewegt hat.

Ferner wird vorgeschlagen, dass dann, wenn das Bedienelement mit hoher Geschwindigkeit bewegt wird, die Veränderung der Lenkübersetzung mit geringer bis mittlerer Geschwindigkeit erfolgt. Wenn der Fahrer das Bedienelement bewegt, ist er darauf eingestellt, dass sich hieraus eine Veränderung des Kurvenradius ergibt. Daher ist im Allgemeinen eine Veränderung der Lenkübersetzung mit geringer bis mittlerer Geschwindigkeit in einer solchen Situation für den Fahrer gut beherrschbar.

Um die Änderungsgeschwindigkeit der Lenkübersetzung mit großer Sicherheit an die jeweilige Fahrsituation anpassen zu können, ist es erforderlich, dass auch über die jeweiligen Fahrsituationen keine Zweifel bestehen. Ergibt die oben beschriebene Plausibilitätsprüfung, dass mindestens ein Parameter korrumpiert ist, also fehlerbehaftet sein kann, kann dieser nicht zur Bestimmung der aktuellen Fahrsituation herangezogen werden. Daher wird in einem solchen Fall für die Bestimmung der Änderungsgeschwindigkeit der Lenkübersetzung ein Parameterwert verwendet, welcher in fehlerfreiem Zustand erfasst worden ist.

Die Erfindung betrifft auch ein Computerprogramm, welches zur Anwendung in einem Verfahren nach einem der obigen Art programmiert ist.

Die Erfindung betrifft auch elektrisches Speichermedium für eine Steuer- und/oder Regeleinrichtung einer Brennkraftmaschine, auf dem ein Computerprogramm zur Anwendung in einem Verfahren der obigen Art abgespeichert ist, sowie eine Steuer- und/oder Regeleinrichtung für eine Brennkraftmaschine, welche zur Anwendung in einem Verfahren der obigen Art programmiert ist Die Erfindung betrifft ferner noch eine Fahrzeuglenkung mit einem Steuer- und/oder Regelgerät, welches die Lenkübersetzung abhängig von mindestens einem vom Fahrzustand des Fahrzeugs abhängigen veränderlichen Parameter verändert, wobei die
Fahrzeuglenkung eine Einrichtung aufweist, welche die Geschwindigkeit, mit der sich die Lenkübersetzung ändern kann, begrenzt.

Auch hier wird vorgeschlagen, um die Akzeptanz einer solchen Fahrzeuglenkung mit variabler Lenkübersetzung beim Benutzer zu erhöhen, dass die Geschwindigkeit, mit der die Veränderung der Lenkübersetzung erfolgt, vom Lenkwinkel und/oder der Lenktätigkeit abhängt. Dabei wird besonders bevorzugt, wenn die Fahrzeuglenkung eine Steuer- und/oder Regeleinrichtung umfasst, welche zur Anwendung in einem Verfahren der obigen Art programmiert ist.

### Zeichnung

Nachfolgend wird ein Ausführungsbeispiel der Erfindung unter Bezugnahme auf die beiliegende Zeichnung im Detail erläutert. In der Zeichnung zeigen:
- Figur 1: eine Prinzipdarstellung einer Steer-by-wire-Fahrzeuglenkung;
- Figur 2: ein Flussdiagramm eines Verfahrens zum Betrieb der Fahrzeuglenkung von Figur 1; und
- Figur 3: ein Flussdiagramm eines Teilbereichs des Verfahrens von Figur 2; und
- Figur 4: ein Diagramm zur Erläuterung des Verfahrens von Figur 2.

### Beschreibung des Ausführungsbeispiels

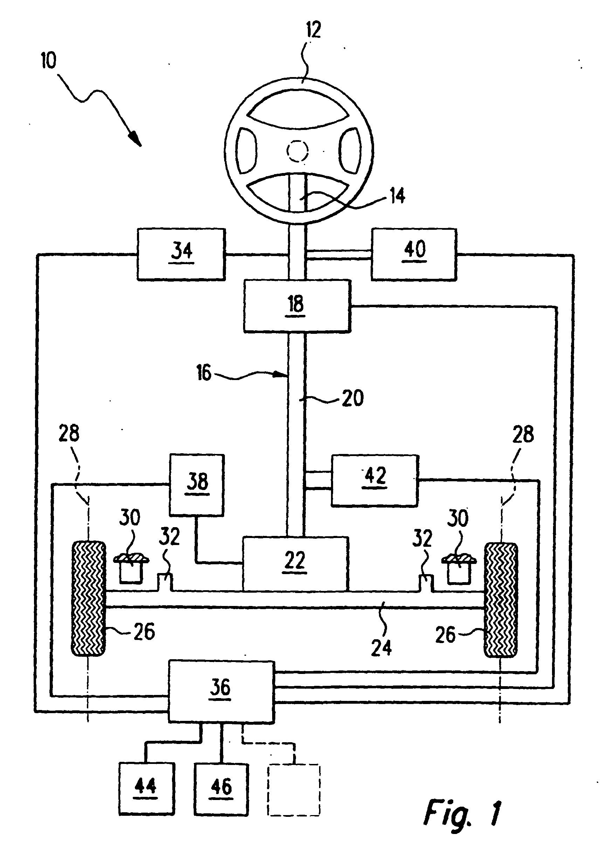

In Figur 1 trägt eine Fahrzeuglenkung insgesamt das Bezugszeichen 10. Sie umfasst ein Lenkrad 12, welches mit einem oberen Bereich 14 einer insgesamt mit 16 bezeichneten Lenkwelle verbunden ist. Über eine schaltbare Kupplung 18 kann der obere Bereich 14 der Lenkwelle 16 mit einem unteren Bereich 20 der Lenkwelle 16 mechanisch verbunden werden.

Der untere Bereich 20 der Lenkwelle arbeitet auf ein Lenkgetriebe 22. Bei diesem Lenkgetriebe handelt es sich um das Lenkgetriebe 22 einer Zahnstangenlenkung. Bei dieser arbeitet ein mit dem unteren Bereich 20 der Lenkwelle 16 verbundenes Lenkritzel (nicht dargestellt) auf eine Zahnstange 24. An ihren jeweiligen Enden ist die Zahnstange 24 mit Rädern 26 verbunden, welche um eine Achse 28 schwenkbar sind. Der maximale Schwenkwinkel der Räder 26 wird durch jeweilige Anschläge 30 mechanisch begrenzt, welche mit Zapfen 32 an der Zahnstange 24 zusammenarbeiten.

Die Winkelstellung des oberen Bereichs 14 der Lenkwelle 16 wird durch einen Winkelsensor 34 abgegriffen. Durch diesen Winkelsensor 34 wird also der Lenkradwinkel δ_{LRA} erfasst. Der Winkelsensor 34 liefert Signale an ein Steuer- und Regelgerät 36. Dieses erhält ebenfalls Signale von einem Radwinkelsensor 38, welcher z.B. die Stellung des Lenkritzels abgreift. Da die Stellung des Lenkritzels und der Radwinkel in einem starren Verhältnis zueinander stehen, kann aus dem Ritzelwinkel δ_{RI} auf den Radwinkel δ_{RA} geschlossen werden.

Ausgangsseitig ist das Steuer- und Regelgerät 36 mit einem Lenkradaktuator 40 verbunden, welcher bei offener Kupplung 18 ein Handmoment auf den oberen Bereich 14 der Lenkwelle 16 und hierdurch auf das Lenkrad 12 aufbringt. Hierdurch können bei offener Kupplung 18 Fahrbahn- und Lenkeinflüsse auf die Lenkung simuliert werden. Durch das Steuer- und Regelgerät 36 wird auch ein Lenksteller 42 angesteuert, welcher ebenfalls bei offener Kupplung 18 den Ritzelwinkel δ_{RI} bzw. den Radwinkel δ_{RA} einstellt. Das Steuer- und Regelgerät 36 erhält schließlich noch Signale von anderen fahrzeugseitigen Systemen, wie z.B. einem ABS (Antiblockiersystem) 44, einem ESP (elektronisches Stabilitätsprogramm) 46, etc.

Die Fahrzeuglenkung 10 arbeitet wie folgt: Im normalen Betriebszustand ist die Kupplung 18 geöffnet, dies bedeutet, dass zwischen dem Lenkrad 12 und dem oberen Bereich 14 der Lenkwelle 16 einerseits und dem unterer Bereich 20 der Lenkwelle 16 und dem Lenkgetriebe 22 andererseits keine mechanische Verbindung besteht. In diesem Betriebszustand arbeitet die Fahrzeuglenkung 10 also als Steer-by-Wire-Lenkung. Bei dieser werden im Steuergerät 36 aus den Signalen, die das Steuer- und Regelgerät 36 vom Lenkrad-Winkelsensor 34, vom Radwinkel-Sensor 38, vom ABS 44 und vom ESP 46 erhält, ein Sollwert δ_{RIS} für einen Regelkreis zur Einstellung des Winkels δ_{RI} bestimmt.

Über diesen Regelkreis, der den Lenksteller 42, den Radwinkel-Sensor 38 und das Lenkgetriebe 22 umfasst, wird der Lenksteller 42 so angesteuert, dass ein bestimmter Ritzelwinkel δ_{RI} und in der Folge ein bestimmter Radwinkel δ_{RA} eingestellt wird. Da in die Bestimmung des Winkels δ_{RI} bzw. δ_{RA} nicht nur die Eingaben des Fahrers am Lenkrad 12, d.h. der Lenkradwinkel δ_{LRA}, eingeht, sondern auch fahrzustandsabhängige Parameter aus dem ABS 44 und dem ESP 46 berücksichtigt werden, ist eine variable Übersetzung zwischen Lenkrad 12 und Rädern 26 bzw. zwischen Lenkradwinkel δ_{LRA} und Radwinkel δ_{RA} gegeben. Auf diese Weise kann z.B. automatisch, ohne dass der Fahrer eingreifen müsste, auf bestimmte Fahrsituationen, wie z.B. Einparken, Schleudern etc., oder auf bestimmte Fahrbahnzustände, wie z.B. Glatteis, reagiert werden.

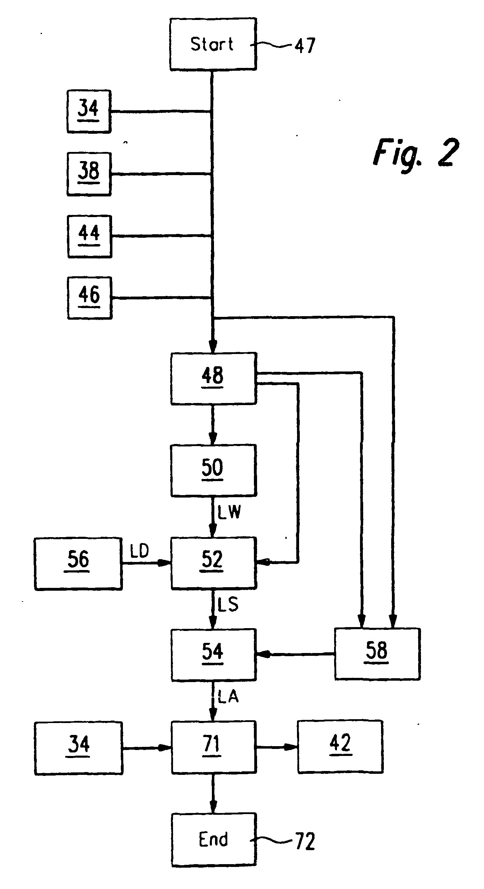

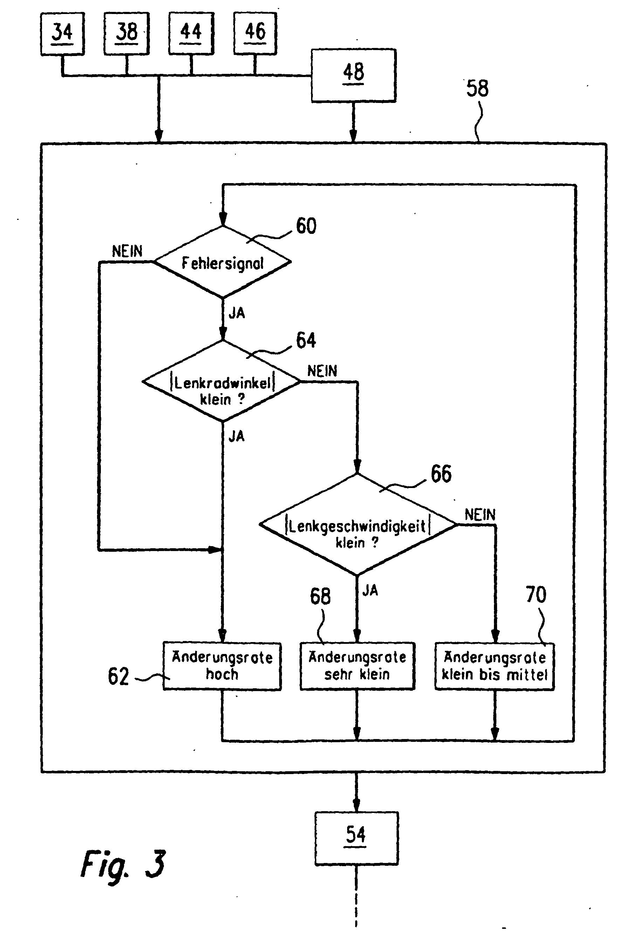

Die Lenkübersetzung, also das Verhältnis zwischen Lenkradwinkel δ_{LRA} und Radwinkel δ_{RA}, wird also vom Steuer- und Regelgerät 36 abhängig von den Lenkungsgrößen, also den Signalen vom Lenkrad-Winkelsensor 34 und vom Ritzel-Winkelsensor 38, sowie von den Fahrzustandsgrößen, die vom ABS 44 und vom ESP 46 geliefert werden, verändert. Die Veränderung der Lenkübersetzung erfolgt dabei gemäß einem Verfahren, welches als Computerprogramm im Steuer- und Regelgerät 36 abgelegt ist. Das Verfahren läuft wie folgt ab (vergl. Figuren 2 und 3):

Nach einem Startblock 48 werden die Signale vom Lenkrad-Winkelsensor 34, vom Ritzel-Winkelsensor 38, vom ABS 44 und vom ESP 46 im Block 48 einer Plausibilitätsprüfung unterzogen. Bei dieser wird auf hier nicht näher erläuterte Art und Weise geprüft, ob Fehler in den entsprechenden Signalquellen oder auf den Signalverbindungen existieren. Die Signale werden dann einem Sollwertgenerator 50 zugeführt, in dem ein Sollwert LW für die optimale Lenkübersetzung ermittelt wird. Dabei werden zum einen die Lenkungsgrößen vom Lenkrad-Winkelsensor 34 und vom Ritzel-Winkelsensor 38 sowie die Fahrzustandsgrößen vom ABS 44 und vom ESP 46 verwendet.

Die optimale Lenkübersetzung LW wird dann einem Schaltblock 52 zugeführt. Dieser leitet entweder den Wert für die optimale Lenkübersetzung LW oder einen Default-Wert LD für die Lenkübersetzung an einen Anpassungsblock 54 weiter. Der Default-Wert LD für die Lenkübersetzung ist in einem Speicher 56 abgelegt. Der Schaltzustand im Schaltblock 52 wird durch das Ergebnis bei der Plausibilitätsprüfung 48 bestimmt: Wird bei der Plausibilitätsprüfung 48 festgestellt, dass sämtliche zugeführten Parameter vom Lenkrad-Winkelsensor 34, vom Ritzel-Winkelsensor 38, vom ABS 44 und vom ESP 46 fehlerfrei sind, dann wird die optimale Lenkübersetzung LW als Signal LS an den Anpassungsblock 54 weitergeleitet.

Wird aber festgestellt, dass einer der Parameter fehlerhaft ist, weil z.B. ein Sensor vollständig ausgefallen ist oder weil es bei der Signalübertragung zu einem Fehler kam, dann wird im Schaltblock 52 anstelle der optimalen Lenkübersetzung LW der Default-Wert LD, der im Speicher 56 bereitgestellt wird, als Signal LS an den Anpassungsblock 54 weitergeleitet. In diesem Fall liegt keine variable Lenkübersetzung mehr vor, sondern es wird eine.starre bzw. konstante Lenkübersetzung angenommen. Der Default-Wert LD ist dabei so gewählt, dass der Fahrer das Fahrzeug in allen üblichen Situationen gut beherrschen kann.

Der Übergang von der optimalen Lenkübersetzung LW auf die Default-Lenkübersetzung LD muss dabei so erfolgen, dass dem Fahrer die Adaption an das geänderte Lenkverhalten möglich ist. Dabei sollte der Fahrer nicht beispielsweise durch eine selbsttätige Drehung des Lenkrads 12 oder durch selbsttätiges Einschlagen der Räder 26 irritiert werden.

Ein schlagartiger Abfall des Eingangssignals LS im Block 54 wird daher ähnlich einem Tiefpassfilter zu einem sich mit einer maximalen oder bestimmten Geschwindigkeit ändernden angepassten Signal LA umgewandelt. Hierzu wird dem Anpassungsblock 54 von einem Parametrierungsblock 58 ein Änderungskriterium bereitgestellt, durch welches die Änderung des angepassten Signals LA für die Lenkübersetzung nur mit einer bestimmten bzw. einer maximalen Geschwindigkeit erfolgen kann. Das im Parametrierungsblock 58 ablaufende Verfahren ist in Figur 3 dargestellt:

In einem Block 60 wird abgefragt, ob die Plausibilitätsprüfung im Block 48 ergeben hat, dass einer oder mehrere der vom Ritzel-Winkelsensor 38, vom Lenkrad-Winkelsensor 34, vom ABS 44 und vom ESP 46 bereitgestellten Parameter fehlerhaft ist. Ist die Antwort im Block 60 nein, sind alle zur Bestimmung der Lenkübersetzung verwendeten Parameter also in Ordnung, wird im Block 62 eine relativ hohe Geschwindigkeit für die Änderung der Lenkübersetzung zugelassen. In diesem Fall wird also die optimale Lenkübersetzung LW im Schaltblock 52 als Signal LS weiter an den Anpassungsblock 54 geleitet. In diesem wird zugelassen, dass das angepasste Ausgangssignal LA, welches schließlich als Sollwert für die Regelung des Lenkstellers 42 verwendet wird, eine hohe Dynamik aufweist. Im Extremfall kann die optimale Lenkübersetzung LW ohne jede Veränderung bis zum Regelkreis für den Lenksteller 42 durchgeleitet werden.

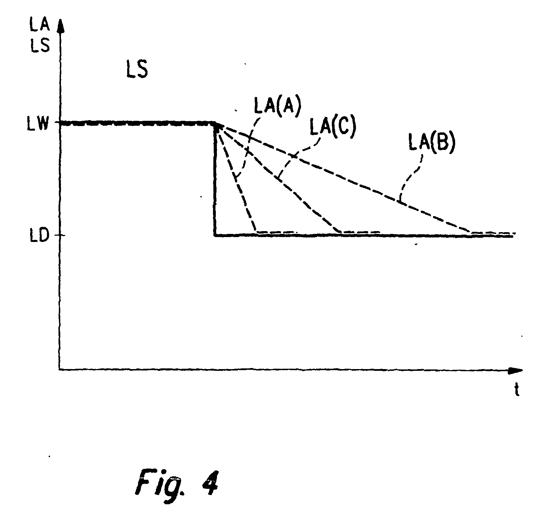

Ist die Antwort im Block 60 jedoch ja, liegt also tatsächlich ein fehlerhaftes Signal vom Lenkrad-Winkelsensor 34, vom Ritzel-Winkelsensor 38, vom ABS 44 und/oder vom ESP 46 vor, dann wird im Schaltblock 52 (Figur 2) anstelle des variablen optimalen Werts LW für die Lenkübersetzung der konstante Default-Wert LD als Signal LS an den Anpassungsblock 54 weitergeleitet. Das Signal LS fällt also schlagartig vom Wert LW auf den Wert LD ab (vergl. Figur 4).

Liegt ein Fehlersignal vor, wird im Block 64 geprüft, ob der aktuelle Lenkradwinkel klein ist. Der Lenkradwinkel wird vom Lenkrad-Winkelsensor 34 bereitgestellt. Ist dies der Fall, wird ebenfalls im Block 62 eine hohe Änderungsrate zugelassen, was durch die gestrichelte Linie LA (A) in Figur 4 dargestellt ist. Der Grund hierfür ist, dass dann, wenn sich das Lenkrad 12 im Bereich seiner Mittelstellung befindet, selbst eine schnelle oder gar schlagartige Änderung der Lenkübersetzung LA für den Fahrer nicht oder nur wenig spürbar ist, da sie keine oder nur eine geringe Änderung des Radwinkels der Räder 26 bewirkt.

Ist die Antwort im Block 64 jedoch nein, wird im Block 66 geprüft, ob die Geschwindigkeit, mit der das Lenkrad 12 bewegt wird, klein ist. Auch das hierfür notwendige Signal wird vom Lenkrad-Winkelsensor 34 bereitgestellt und mit einem von einem Zeitgeber (nicht dargestellt) bereitgestellten Signal verarbeitet. Ist die Antwort im Block 66 ja, wird vom Parametrierungsblock 58 im Block 68 nur eine sehr kleine Geschwindigkeit für die Änderung der Lenkübersetzung LA vom optimalen Wert LW auf den Default-Wert LD zugelassen. Dies wiederum hängt damit zusammen, dass bei eingeschlagenem Lenkrad 12, welches mehr oder weniger stationär in der eingeschlagenen Position verharrt, eine Änderung der Lenkübersetzung zu einer spürbaren Änderung des Kurvenradius des Fahrzeugs führt, was vom Fahrer des Fahrzeugs nur schwer beherrschbar wäre. Daher darf in einer solchen Situation die Lenkübersetzung, wenn überhaupt, dann nur sehr langsam geändert werden. Dies ist durch die gestrichelte Kurve LA (B) in Figur 4 dargestellt.

Wenn das Lenkrad 12 jedoch eingeschlagen ist und gleichzeitig mit erheblicher Geschwindigkeit bewegt wird, dann ist der Fahrer auf eine Änderung des Kurvenradius vorbereitet, so dass eine Änderung der Lenkübersetzung mit einer gewissen Änderungsgeschwindigkeit zulässig ist. Daher wird in einem solchen Fall im Block 70 eine kleine bis mittlere Geschwindigkeit für die Änderung des angepassten Signals LA zugelassen, wie auch gestrichelt durch die Kurve LA (C) in Figur 4 dargestellt ist.

In dem in Figur 3 dargestellten Verfahren wird der angepasste Wert LA für die Lenkübersetzung schließlich einem Regelkreis 71 zugeführt, der aus dem vom Sensor 34 bereitgestellten Lenkradwinkel δ_{LRA} einen Sollwert für den Radwinkel δ_{RA} generiert und den Lenksteller 42 entsprechend ansteuert. Das Verfahren endet im Block 72.

Durch den Parametrierungsblock 58 und den Anpassungsblock 54 wird also je nach Lenksituation ein Zulässigkeitsbereich für die Geschwindigkeit definiert, mit der sich die Lenkübersetzung, also das Signal LA, ändern kann. Auf diese Weise wird sichergestellt, dass der Fahrer in keiner Fahrsituation durch eine zu schnell Änderung der Lenkübersetzung überfordert und somit dessen Sicherheit und die Sicherheit anderer Verkehrsteilnehmer gefährdet wird.

Bei dem in den Figuren 1 - 4 dargestellten Ausführungsbeispiel wurde die Begrenzung der Geschwindigkeit der Änderung der Lenkübersetzung für.den Fall erläutert, dass ein fehlerhaftes Signal vorliegt und daher die variable Lenkübersetzung.zugunsten einer konstanten Default-Lenkübersetzung aufgegeben wird. Es sei an dieser Stelle aber ausdrücklich darauf hingewiesen, dass die Begrenzung der Änderungsgeschwindigkeit für die Lenkübersetzung auch bei der normalen Verwendung einer variablen Lenkübersetzung möglich ist, da auch im normalen Betrieb so plötzliche Änderungen des Sollwerts LW für die optimale Lenkübersetzung auftreten können, dass diese, ohne eine entsprechende Begrenzung im Anpassungsblock 54 bzw. durch den Parametrierungsblock 58, in bestimmten Fahrsituationen den Fahrer überfordern könnten.

Es sei ferner an dieser Stelle darauf hingewiesen, dass das obige Ausführungsbeispiel zwar eine Steer-by-wire-Fahrzeuglenkung betrifft; das beschriebene Verfahren kann allerdings ohne weiteres auch bei einer konventionellen Fahrzeuglenkung eingesetzt werden, bei der eine mechanische Verbindung zwischen den gelenkten Rädern und dem Lenkrad vorhanden ist und bei der die Variation der Lenkübersetzung beispielsweise durch ein Zwischenlenkgetriebe bewirkt wird.

## Patentansprüche

1. Verfahren zum Betrieb einer Fahrzeuglenkung (10), bei dem die Lenkübersetzung (LA) abhängig von mindestens einem vom Fahrzustand des Fahrzeugs abhängigen veränderlichen Parameter (38, 44, 46) verändert wird, wobei die Geschwindigkeit, mit der sich die Lenkübersetzung (LA) ändern kann, begrenzt wird (62, 68, 70), **dadurch gekennzeichnet, dass** die Geschwindigkeit, mit der die Veränderung der Lenkübersetzung (LA) erfolgt, von einem Lenkradwinkel (64) und/oder einer Lenktätigkeit (66) abhängt.

2. Verfahren nach Anspruch 1, **dadurch gekennzeichnet, dass** aus der Stellung (34) eines Bedienelements (12) und aus dem veränderlichen Parameter (38, 44, 46) eine elektronische Stellgröße für die Steuerung und/oder Regelung des Radwinkels mindestens eines Rads (26) des Fahrzeugs oder eines Zusatzlenkwinkels oder eines Zusatzhubs einer Zahnstange gebildet wird (71).

3. Verfahren nach einem der Ansprüche 1 oder 2, **dadurch gekennzeichnet, dass** bei einem fehlerhaften Parameter (38, 44, 46) die Lenkübersetzung (LA) auf einen konstanten Defaultwert (LD) eingestellt wird.

4. Verfahren nach einem der vorhergehenden Ansprüche, **dadurch gekennzeichnet, dass** dann, wenn sich das Bedienelement (12) im Bereich seiner Mittelstellung befindet (64), die Veränderung der Lenkübersetzung (LA) mit mittlerer bis hoher Geschwindigkeit erfolgt (62).

5. Verfahren nach einem der vorhergehenden Ansprüche, **dadurch gekennzeichnet, dass** dann, wenn sich das Bedienelement (12) außerhalb des Bereichs seiner Mittelstellung befindet und nicht oder nur langsam bewegt wird (66), die Veränderung der Lenkübersetzung (LA) mit keiner bis geringer Geschwindigkeit erfolgt (68).

6. Verfahren nach einem der vorhergehenden Ansprüche, **dadurch gekennzeichnet, dass** dann, wenn das Bedienelement (12) mit hoher Geschwindigkeit bewegt wird (66), die Veränderung der Lenkübersetzung (LA) mit geringer bis mittlerer Geschwindigkeit (70) erfolgt.

7. Verfahren nach einem der Ansprüche 3 bis 6, **dadurch gekennzeichnet, dass** für die Bestimmung der Änderungsgeschwindigkeit der Lenkübersetzung (LA) Parameterwerte (38, 44, 48) verwendet werden, die im fehlerfreien Zustand erfasst worden sind.

8. Computerprogramm, **dadurch gekennzeichnet, dass** es zur Anwendung in einem Verfahren nach einem der vorhergehenden Ansprüche programmiert ist.

9. Elektrisches Speichermedium für eine Steuer- und/oder Regeleinrichtung einer Brennkraftmaschine, **dadurch gekennzeichnet, dass** auf ihm ein Computerprogramm zur Anwendung in einem Verfahren der Ansprüche 1 bis 7 abgespeichert ist.

10. Steuer- und/oder Regeleinrichtung für eine Brennkraftmaschine, **dadurch gekennzeichnet, dass** sie zur Anwendung in einem Verfahren nach einem der Ansprüche 1 bis 7 programmiert ist.

11. Fahrzeuglenkung (10) mit einem Steuer- und/oder Regelgerät (36), welches die Lenkübersetzung (LA) abhängig von mindestens einem vom Fahrzustand des Fahrzeugs abhängigen veränderlichen Parameter verändert, wobei sie eine Einrichtung (54, 58) aufweist, welche die Geschwindigkeit, mit der sich die Lenkübersetzung (LA) ändern kann, begrenzt, **dadurch gekennzeichnet, dass** die Geschwindigkeit, mit der die Veränderung der Lenkübersetzung (LA) erfolgt, vom Lenkwinkel (64) und/oder der Lenktätigkeit (66) abhängt.

12. Fahrzeuglenkung (10) nach Anspruch 11, **dadurch gekennzeichnet, dass** sie eine Steuer- und/oder Regeleinrichtung umfasst, welche zur Anwendung in einem Verfahren nach einem der Ansprüche 1 bis 7 programmiert ist.

## Claims

1. Method for operating a vehicle steering system (10), in which the steering transmission ratio (LA) is changed as a function of at least one variable parameter (38, 44, 46) which is a function of the driving state of the vehicle, the speed at which the steering transmission ratio (LA) can change being limited, **characterized in that** the speed at which the steering transmission ratio (LA) changes depends on a steering-wheel angle (64) and/or a steering action (66).

2. Method according to Claim 1, **characterized in that** an electronic actuating variable for controlling and/or regulating the wheel angle of at least one wheel (26) of the vehicle or an additional steering angle or an additional stroke of a rack is formed (71) from the position (34) of an operating element (12) and from the variable parameter (38, 44, 46).

3. Method according to either of Claims 1 and 2, **characterized in that**, in the event of a faulty parameter (38, 44, 46), the steering transmission ratio (LA) is set to a constant default value (LD).

4. Method according to one of the preceding claims, **characterized in that** the steering transmission (LA) is changed (62) at a medium to high speed whenever the operating element (12) is situated in the region of its centre position (64).

5. Method according to one of the preceding claims, **characterized in that** the steering transmission ratio (LA) is changed (68) at zero to low speed whenever the operating element (12) is situated outside the region of its centre position and is not being moved or being moved only slowly (66).

6. Method according to one of the preceding claims, **characterized in that** the steering transmission ratio (LA) is changed at a low to medium speed (70) whenever the operating element (12) is being moved at a high speed (66).

7. Method according to one of Claims 3 to 6, **characterized in that** parameter values (38, 44, 48) which have been detected in the fault-free state are used to determine the change in speed of the steering transmission ratio (LA).

8. Computer program, **characterized in that** it is programmed for use in a method according to one of the preceding claims.

9. Electric storage medium for a control and/or regulating device of an internal combustion engine, **characterized in that** a computer program for use in a method from Claims 1 to 7 is stored on it.

10. Control and/or regulating device for an internal combustion engine, **characterized in that** it is programmed for use in a method according to one of Claims 1 to 7.

11. Vehicle steering system (10) having a control and/or regulating unit (36) which changes the steering transmission ratio (LA) as a function of at least one variable parameter which is a function of the driving state of the vehicle, the said vehicle steering system (10) having a device (54, 58) which limits the speed at which the steering transmission ratio (LA) can change, **characterized in that** the speed at which the steering transmission ratio (LA) is changed depends on the steering angle (64) and/or the steering action (66).

12. Vehicle steering system (10) according to Claim 11, **characterized in that** it comprises a control and/or regulating device which is programmed for use in a method according to one of Claims 1 to 7.

## Revendications

1. Procédé pour commander une direction de véhicule (10), selon lequel la démultiplication de la direction (LA) est modifiée en fonction d'au moins un paramètre (38, 44, 46) variable par rapport à l'état de fonctionnement du véhicule, la vitesse à laquelle la démultiplication de la direction (LA) peut être modifiée étant limitée (62, 68, 70),
**caractérisé en ce que**
la vitesse à laquelle s'effectue le changement de démultiplication de la direction (LA) dépend d'un angle du volant de direction (64) et/ou d'une action de la direction (66).

2. Procédé selon la revendication 1,
**caractérisé en ce qu'**
une grandeur de commande électronique servant à commander et/ou à réguler l'angle de roue d'au moins une roue (26) du véhicule ou un angle braquage supplémentaire ou une course supplémentaire d'une crémaillère est formée (71) à partir de la position (34) d'un organe de commande (12) et à partir du paramètre variable (38, 44, 46).

3. Procédé selon l'une des revendications 1 ou 2,
**caractérisé en ce que**
la démultiplication de la direction (LA) est réglée sur une valeur constante par défaut (LD) dans le cas où un paramètre (38, 44, 46) est erroné.

4. Procédé selon l'une quelconque des revendications précédentes,
**caractérisé en ce que**
lorsque l'organe de commande (12) se trouve (64) dans la zone d'une position centrale, le changement de démultiplication de la direction (LA) s'effectue (62) entre une vitesse moyenne et une vitesse élevée.

5. Procédé selon l'une quelconque des revendications précédentes,
**caractérisé en ce que**
quand l'organe de commande (12) se trouve ensuite en dehors de sa zone de position centrale et n'est pas déplacé ou déplacé que très lentement (66), le changement de démultiplication de la direction (LA) s'effectue entre une petite vitesse et une vitesse insignifiante (68).

6. Procédé selon l'une quelconque des revendications précédentes,
**caractérisé en ce que**
quand l'organe de commande (12) est ensuite déplacé (66) à grande vitesse, le changement de démultiplication de la direction (LA) s'effectue entre une vitesse insignifiante et une vitesse moyenne (70).

7. Procédé selon l'une des revendications 3 à 6,
**caractérisé en ce que**
pour définir la vitesse de modification de la démultiplication de la direction (LA), on utilise des valeurs de paramètres (38, 44, 48) déterminées dans un état non défaillant.

8. Programme informatique,
**caractérisé en ce qu'**
il est programmé pour être utilisé dans un procédé selon l'une quelconque des revendications précédentes.

9. Support d'enregistrement électrique pour un dispositif de commande et/ou de régulation d'un moteur à combustion interne,
**caractérisé en ce qu'**
un programme informatique est enregistré sur celui-ci pour être utilisé dans un procédé selon l'une des revendications 1 à 7.

10. Dispositif de commande et/ou de régulation pour un moteur à combustion interne,
**caractérisé en ce qu'**
il est programmé pour être utilisé dans un procédé selon l'une des revendications 1 à 7.

11. Direction de véhicule (10) comprenant un appareil de commande et/ou de régulation (36) qui modifie la démultiplication de la direction (LA) en fonction d'au moins un paramètre variable par rapport à l'état de fonctionnement du véhicule, et elle présente un dispositif (54, 58) qui limite la vitesse à laquelle peut être modifiée la démultiplication de la direction (LA),
**caractérisée en ce que**
la vitesse à laquelle s'effectue le changement de démultiplication de la direction (LA) dépend de l'angle de braquage (64) et/ou de l'action de la direction (66).

12. Direction de véhicule (10) selon la revendication 11,
**caractérisée en ce qu'**
elle comprend un dispositif de commande et/ou de régulation programmé pour être utilisé dans un procédé selon l'une des revendications 1 à 7.
